# EUROPEAN PATENT APPLICATION

(11) **EP 4 534 951 A1**
(43) Date of publication of application: **09.04.2025**
(21) Application number: 23202224.4
(22) Date of filing: 06.10.2023
(51) Int. Cl.: G01B 11/25

(54) **DEPTH SENSING SYSTEM AND METHOD**

(71) Applicant: VoxelSensors SRL, 1000 Brussels (BE)
(72) Inventor: Alaie, Seyed Arman, 1040 Etterbeek (BE)

(57) **Abstract**

The present invention relates to an optical sensing system (1) for depth estimation. The system (1) comprises at least a first optical sensor (2), wherein said first optical sensor (2) comprises a plurality of sensing units (3). Each of said sensing unit (3) comprises a photo detector, wherein said first optical sensor (2) has a first predetermined length and a first predetermined width. Said first optical sensor (2) having a first field of view (6). The system (1) further comprises at least a first projector (4), wherein said first projector (4) is adapted to project a first light beam (8) on said field of view (6). The system (1) further comprises a first scanning means. The system (1) further comprises a first set of optics able to make an image of said first field of view (6) on said first optical sensor (2). The system (1) is characterized in that said first scanning means is adapted to scan said first beam (8) in one angular degree of freedom along or within said first field of view (6).

## Description

### TECHNICAL FIELD

The present invention relates to an optical sensing system for depth estimation.

### BACKGROUND

Linear image sensors are known in the art. In many cases, they are made of linearly arranged pixels, for example having one or two rows and many columns. For example, the sensor is placed on top of a conveyer belt, for inspecting industrial items, or for detecting defects thereof. It can also be used in hand-held sensing devices, for example barcode readers. However, current systems comprising said sensors are power inefficient and have high latency. For example, in case an object is passing across the field of view of the sensor with a very high speed, the sensor may not be able to detect said object, due to the high latency. Such systems are currently also not immune to ambient light.

Furthermore, such systems are neither efficient nor appropriate for high-speed depth profile measurements. It is known to a skilled person that in order to achieve depth profile measurements, current systems need a 2-dimensional high speed image sensor. For example, a laser source projects a fixed pattern on a scene, wherein a 2-dimensional optical sensor is present, normally under an angle, wherein the spatial information corresponding to the pattern is created on the imager along a first dimension, while the depth information (disparity) is created on the imager along a second dimension. It is known to persons skilled in the art that 2-dimensional high-speed imagers required for highspeed sensing have high power consumption.

There is need therefore for a sensing system that allows depth sensing that is low power, low latency, and immune to ambient light. The present invention aims to resolve at least in part the problems mentioned above.

### SUMMARY OF THE INVENTION

It is an object of embodiments of the present invention to provide a system and method for optical sensing, specifically for depth estimation, more specifically using linearly arranged image sensors, with low latency, low power consumption, and immunity to ambient light.

To achieve this, the primary invention is to create a line scanning system whereby both the spatial information as well as the depth information (disparity) are created along the same dimension of the optical sensor. The separation of both type of information is done in the time-domain by scanning the pattern (e.g. dot) along the same dimension and to create a high-speed sensor with high aspect ratio, and preferably single-photon sensitivity, to achieve low power consumption, low latency and high immunity to the environment (ambient light, other sensor systems). This is explained further in detail throughout the description.

In a first aspect, the present invention relates to an optical sensing system for depth estimation, comprising:
- at least a first optical sensor, wherein said optical sensor comprises a plurality of sensing units, each of said sensing unit comprising a photo detector, wherein said first optical sensor has a first predetermined length and a first predetermined width, said first optical sensor having a first field of view,
- at least a first projector adapted to project a first light beam on said field of view,
- a first scanning means, and
- a first set of optics able to make an image of said first field of view on said first optical sensor,
characterized in that
said first scanning means is adapted to scan said first beam, in one angular degree of freedom, along or within said first field of view.

It is an advantage of embodiments of the present invention that a fast depth estimation of the first field of view is obtained, due to linearly scanning the beam in one angular degree of freedom, together with linearly detecting the light spot resulting from the light beam. It is an advantage of embodiments of the present invention that the system is able to detect objects moving very fast across the first field of view, or to use a scanner moving fast to detect a static or a moving object, in comparison to systems with two-dimensional scanning. This system is advantageous in dynamic environments, especially a moving object or a moving scanner (e.g. a hand-held scanner). It is an advantage of embodiments of the present invention that the power consumption is minimal due to the scanned area being small. It is an advantage of embodiments of the present invention that the system is immune to ambient light, since the detection is based on the projection pattern of the beam, for example since no other area is being scanned by a projection pattern of the beam. This also makes the system less sensitive to dust and industrial environment contamination, and to brightness variation. It is an advantage of embodiments of the present invention that the need for stereo-matching is eliminated, since the system relies on the position of the light beam and the resulting projection pattern thereof. It is an advantage of embodiments of the present invention that the system is capable of detecting very small objects compared to other systems, due to the scanning in one degree of freedom using small patterns (e.g. dot pattern). It is also advantageous that the system is better at detecting sharp edges and angles and can have better resolution in complex shapes, in comparison to structured light systems or floor light time-of-flight systems, in which the scanning pattern is big. Having a smaller projection pattern also allows sensing at longer distances. The system is also advantageous in simplifying the calculations and minimizing processing power, since the scanning is done along a line.

Preferred embodiments of the first aspect of the invention comprise one or a suitable combination of more than one of the following features.

The first predetermined length is preferably at least two times longer than said first predetermined width. It is an advantage of embodiments of the present invention that a system with optimized minimal footprint, low energy consumption, and low latency is obtained.

The first light beam results in a first projection pattern, wherein said pattern is imaged on said first optical sensor and has a spot size, wherein the first predetermined width of said first optical sensor is preferably at least equal to said spot size, or said first predetermined width is preferably at least equal to the width of two sensing units. It is an advantage of embodiments of the present invention that the image of the projection pattern is fully captured, such that different filtering methodologies can be applied. It is an advantage of embodiments of the present invention that two neighboring sensing units (along the axis defining the width) can be used to filter out false detections.

The scanning is preferably between two extreme points on said first field of view. It is an advantage of embodiments of the present invention that objects present on the trajectory between the two extreme points are continuously monitored and detected.

The system preferably comprises at least a second optical sensor.

The system is preferably adapted to triangulate detection points of said first optical sensor with projection position of said first projector or with detection points of said second optical sensor. It is an advantage of embodiments of the present invention that the depth of the field of view is obtained.

The second optical sensor preferably comprises a plurality of sensing units, each of said sensing unit comprising a photo detector, said second optical sensor having a second field of view,
wherein the system further comprises:
   - at least a second projector adapted to project a second light beam on said second field of view,
   - a second scanning means, and
   - a second set of optics able to make an image of said second field of view on said second optical sensor,
wherein said second scanning means is adapted to scan said second light beam in one angular degree of freedom along or within said second field of view,
wherein said second optical sensor is parallel to said first optical sensor and distanced therefrom by a predetermined distance along the axis defining the first predetermined width, or wherein said second optical sensor is perpendicular to said first optical sensor and distanced therefrom by a predetermined distance along the axis defining the first predetermined width. It is an advantage of embodiments of the present invention that the volume of objects in the field of view may be estimated. It is an advantage of embodiments of the present invention that the speed of movement of objects in the field of view may be estimated.

The photodetectors are preferably single photon detectors, preferably SPADs. It is an advantage of embodiments of the present invention that a fast detection of the position of the projection pattern is obtained due to the fast nature of the detectors.

In a second aspect, the present invention relates to a method for depth estimation, comprising the steps of:
- projecting a first light beam onto a first field of view, by means of at least a first projector, thereby defining a first projection pattern onto said first field of view,
- scanning said first light beam on said first field of view,
- imaging said first field of view (6) by means of a first set of optics on a first optical sensor, wherein said first optical sensor comprises a plurality of sensing units, wherein each sensing unit comprises a photo detector, and
- configuring said first optical sensor to have a first predetermined length and a first predetermined width,
characterized in that the method comprises the step of:
- configuring said scanning to be in one angular degree of freedom along or within said first field of view.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### DESCRIPTION OF THE FIGURES

The disclosure will be further illustrated by means of the following description and the appended figures.
Figure 1 shows a system (1) for optical sensing (a) having two optical sensors (2, 7), and (b) having one optical sensor (2), according to embodiments of the present invention.
Figure 2 (a-c) shows the system (1) comprising four optical sensors (2, 7, 12, 13), according to embodiments of the present invention.
Figure 3 (a-c) shows different configurations, according to embodiments of the present invention.
Figure 4 (a, b) shows a field of view (6) of an optical sensor, oriented perpendicular to the direction of movement of an object (18), according to embodiments of the present invention.
Figure 5 (a-c) shows a hand scanning system (20), according to embodiments of the present invention.
Figure 6 (a-f) shows the system (1) used for a conveyer belt (22), according to embodiments of the present invention.
Figures 7-8 show a comparison between prior art system and the system according to this invention.

Any reference signs in the claims shall not be construed as limiting the scope. In the different drawings, the same reference signs refer to the same or analogous elements.

### DETAILED DESCRIPTION

The present invention relates to a system and method for depth estimation.

In a first aspect, the present invention relates to an optical sensing system for depth estimation. The system is suitable for depth estimation in substantially one dimension, for example substantially along a straight. The system comprises at least a first optical sensor. Said optical sensor comprises a plurality of sensing units, and each of said sensing unit comprising a photo detector. The first optical sensor has a first predetermined length and a first predetermined width. In other words, the optical sensor is elongated in one direction (the length) and is much shorter in the other direction (the width). The first optical sensor has a first field of view.

The system further comprises at least one projector, for example a light source. The light source is adapted to generate a light beam on said first field of view (i.e. the view of the optical sensor), which generates a first projection pattern (e.g. a light spot). The system further comprises a first scanning means. Said scanning means is adapted to scan the first light beam on said first field of view, for example along a trajectory. Said trajectory comprises a plurality of points on said first field of view. It is preferable to scan as many points as possible, since this implies more information is obtained in relation to the field of view and the depth of each point. However, the skilled person understands the time-speed tradeoff, for example having more points would result in slower scanning.

The system further comprises a first set of optics able to make an image of said first field of view on said first optical sensors. For example, the light is reflected, after hitting objects in the first field of view, imaged by said first set of optics, and finally received by the first optical sensor.

The first scanning means is adapted to scan said first light beam in one angular degree of freedom along or within said first field of view. Alternatively, the first scanning means may be adapted to scan the first light beam by moving said light beam along a line. In both cases, the direction of scanning corresponds to the axis defining the first predetermined length of said first optical sensor. For example, the scanning means and the optical sensor are aligned. The scanning means and the optical sensor may be slightly misaligned, but the scanning trajectory should remain within the field of view of the optical sensor.

For example, the scanning means is scanning in one angular degree of freedom. In this case, theoretically speaking, assuming the field of view has a flat surface, the trajectory may be a straight line. However, in reality, the field of view is not a flat surface, but rather comprises many different objects having different depths. Therefore, the projection pattern resulting from the light beam would result in disparity on the sensor(s) (e.g. the projection pattern resulting from the light beam would jump from one surface to the other). In other words, the light beam defines a plane on which the projection pattern is projected, depending on the surface of the object. In other words, the trajectory of the scanned beam defines a plane (2D), wherein said trajectory is the intersection between the plane and the closest object in the field of view. The first scanning means may for example be a 1D-MEMS scanner or a 1D-mirror or a 1D scanner, or an optical phase array, or meta surface approach beam scanning, or a line beam scanner, or the like. For example, a MEMS which has one angular degree of freedom.

The length and width of the first optical sensor corresponds to the length and width of the first field of view. For example, the first optical sensor is arranged such that it is able to detect the first projection pattern being scanned on the first field of view. The axis defining the length of the optical sensor is parallel to, or located in the plane defined by, the scanning trajectory. Scanning is preferably continuous, such that objects in the first field of view are continuously scanned and identified. For example, a light source generates a light beam, which produce a light spot (i.e. said projection pattern) on an object, wherein said beam is continuously scanned on said first field of view along said trajectory.

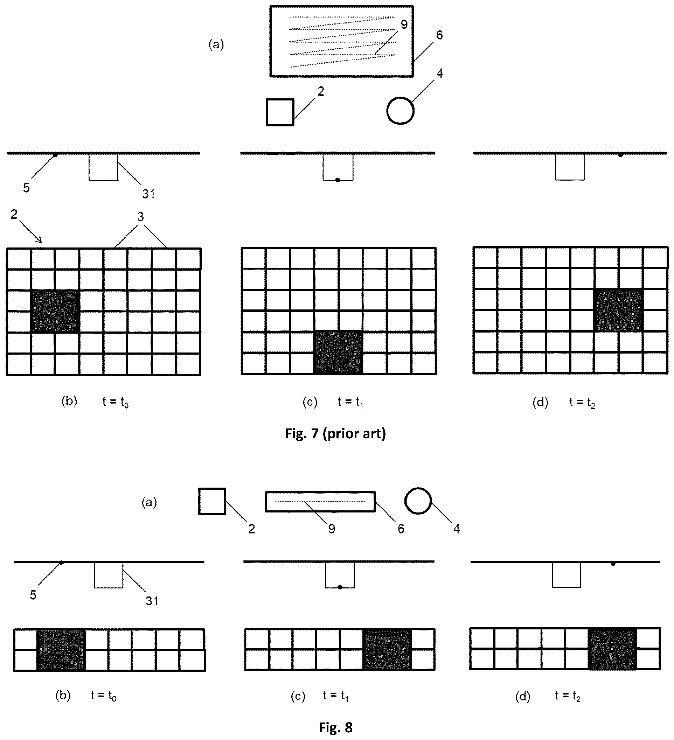

Based on the location of the first projection pattern imaged on said first optical sensor, e.g. corresponding to the location of the sensing unit(s) receiving the image of the projection pattern, the depth information of the field of view is calculated. Scanning the first field of view allows calculating the depth of each point along the trajectory. This is done for example by triangulation as explained below. As shown in Fig. 8, the depth is calculated along one dimension of the optical sensor, rather than along the two dimensions in two-dimensional optical sensors, as shown in Fig. 7.

The scanned trajectory in such a scanner, having one angular degree of freedom, is short and takes a short time and energy, in comparison to a scanned trajectory in two dimensional scanners. Therefore, objects moving very fast across the trajectory can be detected, wherein the same objects moving across a two-dimensional scanner may have been missed.

Since the detection is based on the projection pattern, and since there is a significant difference between an illuminated point and a non-illuminated point due to the concentration of the illumination in a small area (e.g. the projection pattern is a dot-like pattern), the system is immune to ambient light. At the same time, it is known where the projection pattern is shining at each moment, therefore a detection in a spot or area in which the projection pattern is not shining at that moment, is likely a false detection. Similarly, since the detection is based on said projection pattern being dot-like, the power consumption is minimal.

Since the detection relies on the position of the first projection pattern, it is not needed to perform stereo-matching, for example between the light source and the first optical sensor, or between the first optical sensor and a second optical sensor. For example, the image in the first optical sensor can be matched to the image in the second optical sensor, for example using said light spot as a reference, without need for stereo-matching.

Preferably, finding depth information may be preceded by a filtering step, for example to reduce the number of sensing units with false detections. Filtering may be based on expected pulse width, expected dot projection size, past detection(s) and current detection(s) of the pixel and its neighboring pixel(s). For example, checking the detection of the neighboring sensing units (e.g. pixels), or checking the persistence of the detections over time. This is an in-pixel filtering mechanism. Another filtering mechanisms may be also available, for example after projecting the detections on a periphery of the optical sensor, it is possible to remove some noisy detections, since the projection pattern is known.

Preferably, the detected signal is thereafter outputted on row and column signal busses, allowing to know the locations (i.e. the x, y coordinates) of the laser dot at each time stamp. For example, filtering is done based on past bus information to identify detection locations with highest likelihood of having detected photons originating from active illumination.

Preferably, the first predetermined length is preferably at least two times longer than said first predetermined width, more preferably at least five times, even more preferably at least ten times, most preferably at least 20 times or 100 times. For example, the ratio between the width and the length is high, for example at least 1:10, or for example between 1:10 and 1:10000, preferably between 1:100 and 1:1000. That being said, the first predetermined width is preferably minimal, while on the other hand, the first predetermined length depends on the desired length of the field of view. In other words, the first optical sensor is substantially (almost completely, to a great extent) a one dimensional array of sensing units. Substantially one-dimensional may include the case e.g. in which the first optical sensor comprises 10 columns and 1 row of sensing units, but may also include the case in which the first optical sensor comprises 10 or 20 columns and 1, 2 or 3 rows of sensing units. This is advantageous to obtain a system having a small footprint. This is also advantageous to obtain an optical sensor with dimensions corresponding to the one-dimensional scanning i.e. able to detect said one-dimensional scanning (i.e. along one angular degree of freedom), and therefore to obtain an optimized and minimal footprint, low energy consumption, and low latency.

Preferably, the first beam results in a projection pattern, wherein said pattern is imaged on said first optical sensor and has a spot size, wherein the first predetermined width of said first optical sensor is at least equal to said spot size. For example, the optical sensor has a predetermined number of sensing units (alongthe axis defining the width), such that the combined width of the sensing units is at least equal to the spot size. The spot size would be smaller for objects further away, and bigger for objects closer by. Therefore, it is preferable to dimension the first optical sensor such that the expected spot size is not bigger than the width of the first optical sensor. Normally, this would require having more than one sensing units along the width of the first optical sensor.

The above is advantageous in making sure the image of the first projection pattern is fully captured, such that further filtering methods can be applied to filter out ambient light. For example, a method in which neighboring detections are checked to determine whether a detection is a true or a false positive detection.

Alternatively, said first predetermined width is at least equal to the width of two (or three, or more) sensing units. This is advantageous in neighborhood-assisted detection. For example, if two neighboring sensing units (along the axis defining the width) have a "true" status, then it is likely the detection is correct.

Preferably, the scanning is between two extreme points on said first field of view. For example, one extreme point is located in one side or one edge of the first field of view, while the other extreme point is located on the other side or edge of the first field of view. The first scanning means is adapted to scan the first projection pattern between the two extreme points, back and forth. For example, starting from one extreme point, and scanning the projection pattern to the other extreme point, and back to the first extreme point, and so on. This is advantageous in continuously scanning the area in between the extreme points and along the trajectory, such that objects that are present in between the extreme points are detected.

Preferably, the system comprises at least a second optical sensor. The second optical sensor may be assisting the first optical sensor. For example, assisting the first optical sensor in triangulating detections points of the first optical sensor and the second optical sensor in order to obtain depth information. Alternatively, the second optical sensor may be independent from the first optical sensor, for example may have its own light source and scanning means. The two sensors may be arranged in different configuration, to achieve different results, as described below.

Preferably, the system is adapted to triangulate detection points of said first optical sensor with projection position of said first projector or with detection points of said second optical sensor. In the first case, it is known where the light source is shining at each moment. Therefore, triangulation may be based on the detection points of said first optical sensor, and the location from where the light source is originating, similarly to the case in which a second optical sensor is used to achieve said triangulation. For example, considering the light source as a camera or an optical sensor, for which the image plane would then contain the dots forming the scanning pattern, instead of seeing the light spot with the sensing units. For example, the instantaneous position and orientation of the light pattern resulting from the light beam projected by said projector is triangulated with the detection of one optical sensor. In the second case, the detection points of the first and the second optical sensors are triangulated.

Scanning a light beam from said light source is advantageous in allowing triangulation. For example, using a system comprising a light source emitting a light beam on a scene (e.g. an environment) and two of said optical sensors, wherein said two sensors have a shared field of view of the scene, it is possible to convert x-y-time data of the two sensors to x-y-z-time data by triangulation, for each time stamp. For example, by adapting said light source to illuminate a light beam on said scene in an illumination trace, wherein said light source comprises means adapted to scan said light beam on said scene (preferably continuously), wherein said optical sensors monitor the light spot produced by said light beam and output locations of points of at least one object (e.g. points of surfaces of said object) in said scene along said trace at a plurality of instances, wherein the x-y-time data of the two optical sensors can be converted to x-y-z-time data using triangulation. The light source may act for example as a reference point, such that said locations of said points of said object of the first optical sensor can be triangulated with those of the second optical sensor, to create the depth or z-dimension.

Preferably, the second optical sensor is constructed similarly to the first optical sensor, as described hereinbelow. For example, the second optical sensor comprises a plurality of sensing. Each of said sensing unit comprising a photo detector. Said second optical sensor has a second predetermined length and a second predetermined width. Said second optical sensor has a second field of view. The system further comprises at least a second projector adapted to project a second light beam on a second field of view. The system further comprises a second scanning means adapted to scan the second projection pattern on said second field of view. The system further comprises a second set of optics able to make an image of said second field of view on said second optical sensor. Said second scanning means is adapted to scan said second light beam in one angular degree of freedom along or within said second field of view. For example, the scanning means is adapted to scan said second light beam in one angular degree of freedom corresponding to the axis defining the second predetermined length.

Said second optical sensor is preferably parallel to said first optical sensor, and distanced therefrom by a predetermined distance along the axis defining the first predetermined width. For example, the two sensors are arranged after each other, for example the two sensors are arranged such that an object moving across and perpendicular to the first field of view would eventually move across the second field of view perpendicularly thereto.

Alternatively said second optical sensor is perpendicular to said first optical sensor and distanced therefrom by a predetermined distance along the axis defining the first predetermined width. For example, the two sensors are arranged such that an object moving across and perpendicular to the first field of view would eventually move across the second field of view, but in this case the object will be scanned in a vertical fashion by one sensor, and in a horizontal fashion in the second sensor.

In the first configuration i.e. in case of two parallel optical sensors, it is possible to estimate the speed of movement of an object moving through the fields of view of said first and second optical sensors, since the distance between the two optical sensors is known. For example, the detection in the first optical sensor may be compared to the detection in the second optical sensor, for example the timing of said detections, and since the distance between the two sensors is known, estimating or calculating the speed of movement is possible. The faster the scanning speed of the scanning means, the more accurate the speed measurement.

In the second configuration i.e. in case of two optical sensors, in which one is perpendicular to the other, such that the first optical sensors is able to scan an object in a horizontal fashion, and therefore find horizontal cross-sectional information of the object such as the depth, and the second sensor is able to scan the object in a vertical fashion, and therefore find vertical cross sectional information of the object such as the depth. For example, this allows estimating the volume of the object or to reconstruct the object using a depth model thereof.

Preferably, the findings (e.g. the depth information) of each optical sensor is combined with the findings of other optical sensors in the system. For example, the findings are combined together. For example if the speed of an object is known, and the distance between the sensors is known, then a good estimation of the depth and the dimensions of an object can be obtained.

Preferably, the photodetectors are single photon detectors, preferably SPADs. Alternatively, said photo detector is an avalanche photo detector. Single photon detectors are advantageous since they are fast by nature, such that the position of the light spot (i.e. the projection pattern) is detected in a fast manner and accurate manner. Single photon detectors also minimize the energy needed to be able to detect said projection pattern. In other prior art systems where single photon detectors are not used, the detection is slow such that for example the scanned pattern on the field of view appears as a line instead of individual light spots, in which case stereo matching would be needed. However, using single photon detectors to detect a light spot (e.g. a dot) that is being scanned, eliminates the need for stereo-matching.

Furthermore, using a single photon detector such as SPAD in the pixels (i.e. sensing units) is advantageous because it is sensitive to a single photon, which means that the active projected structure will need a minimum amount of energy since the detector is single photon sensitive. Another advantage is sub-nanosecond response time of detectors such as SPADs, meaning the photon is detected and encoded into a digital signal in nanoseconds.

For example, the detector is adapted to output a logic signal e.g. an electrical detection signal upon detection of a photon. For example, a detection signal may be represented by a signal comprising logic '1' e.g. a detection, while no detection signal may be represented by a signal comprising logic '0' e.g. no detection. Alternatively, a detection signal may be represented by or result in a pulse signal, e.g. a transition from logic '0' to logic '1', then a transition back from logic '1' to logic '0', while no detection may be represented by (or result in) an absence of such a pulse signal. Preferably, each photo detector is arranged in a reverse biased configuration.

Preferably, the light source is adapted to be in a wavelength detectable by the sensing units of the optical sensor. For example, between 100 nanometer and 10 micrometer, preferably between 100 nanometer and 1 micrometer. For example, each optical sensor comprises photo detectors able to detect photons impinging on each detector within a wavelength detection window falling within the range of 100 nanometer and 10 micrometer, preferably between 100 nanometer and 1 micrometer. It is also possible to use multiple wavelengths to reduce sensitivity to surface and color, and then have a filter on chip.

Preferably, each optical sensor, along the axis of its length, comprises more than 10 pixel sensors (i.e. sensing units), preferably more than 100 pixel sensors, more preferably more than 1000 pixel sensors. On the other hand, each optical sensor, along the axis of its width, comprises at most one sensing unit, preferably at most two or three sensing units.

Preferably, the system comprises image representation means, for example a screen-like or other image representation devices, so as to reproduce locations of points of said objects in said fields of view.

Preferably, the optical system is used for 3D vision applications. For example, the system may be used to visualize objects in three dimensions. Alternatively, said sensor may allow analyzing the scene, for example by extracting features of objects in the scene, without necessarily producing an image of said scene. Preferably, the system further comprises a plurality of optical sensors and/or a plurality of light sources. This is advantageous in creating 3D vision. For example by triangulating the outputs (i.e. the x-y data) of two such optical sensors to obtain 3D information (x-y-z data).

In a second aspect, the present invention relates to a method for determining the depth profile of a field of view. The method comprises the step of projecting by means of at least a first projector at least a first projection pattern onto a first field of view. For example, the method comprises the step of providing a light source, which generates said first projection pattern on said first field of view.

The method further comprises the step of scanning a first light beam generating said first projection pattern on said first field of view. The method further comprises the step of imaging the first projection pattern by means of at least a first optical sensor and optics. In other words, the first field of view is imaged on said first optical sensor, for example using the appropriate optics (e.g. at least one imaging optics) that are able to image said scene on said optical sensors.

The first optical sensor comprises a plurality of sensing units, and each sensing unit comprises a photo detector. For example, the method comprises the step of providing said first optical sensor, and providing a plurality of sensing units in each optical sensor. For example, the reflected light off the field of view is received by at least one sensing unit, after which the optical pulse is translated into an electrical signal or logic pulse. Each pulse is timestamped with respect to a reference clock. The detected signal is subsequently filtered, for example using temporal and neighborhood information, for example as described in PCT IB2021 054688, PCT EP2021 087594, PCT IB 2022 000323, and PCT IB2022 058609. For example, checking the detection of the neighboring sensing units, since the detections are likely to be detected over more than one pixel, as described in PCT EP2021 087594. Alternatively or additionally, checking the persistence of the detections over time as described in PCT IB2022 058609. Therefore, the detections which are persistent over a long period of time are likely true detections, and the detections otherwise are likely false detections. Other filtering mechanisms may be envisaged, as described in PCT IB2021 054688, PCT EP2021 087594, PCT IB2022 000323, and PCT IB2022 058609.

The method further comprises the step of configuring the first optical sensor to have a first predetermined length and a first predetermined width. The method further comprises the step of configuring said scanning in one angular degree of freedom corresponding to the axis defining the first predetermined length of said first optical sensor.

Preferably, the method further comprises the step of configuring said first predetermined length to be at least two times longer than said first predetermined width.

Preferably, said first projection pattern imaged on said first optical sensor has a spot size, wherein the method further comprises the step of configuring the first predetermined width to be at least equal to the spot size of said first projection pattern, or wherein said first predetermined width is at least equal to the width of at least two sensing units.

Preferably, the method further comprises providing a second optical sensor.

Preferably, the method further comprises the step of triangulating detection points of said first optical sensor with projection position of said first projector or with detection points of said second optical sensor.

Preferably, the method further comprises the step of projecting a second light beam onto a second field of view, by means of at least a second projector, thereby defining a second projection pattern onto said second field of view. The method further comprises scanning said second light beam on said second field of view. The method further comprises imaging said second field of view, by means of a second set of optics on said second optical sensor, wherein said second optical sensor comprises a plurality of sensing units, wherein each sensing unit comprises a photo detector. The method further comprises configuring said second optical sensor to have a second predetermined length and a second predetermined width. The method further comprises configuring said scanning to be in one angular degree of freedom along or within said second field of view. For example, substantially in one dimension corresponding to the axis defining the second predetermined length of said second optical sensor. The method further comprises one of the following two options: a) arranging said second optical sensor parallel to said first optical sensor, and distanced therefrom by a predetermined distance along the axis defining the first predetermined width, or b) arranging said second optical sensor perpendicular to said first optical sensor and distanced therefrom by a predetermined distance along the axis defining the first predetermined width.

Any feature of the second aspect (method) may be as correspondingly described in the first aspect (system). Further characteristics and advantages of embodiments of the present invention will be described with reference to the figures. It should be noted that the invention is not restricted to the specific embodiments shown in these figures or described in the examples, but is only limited by the claims.

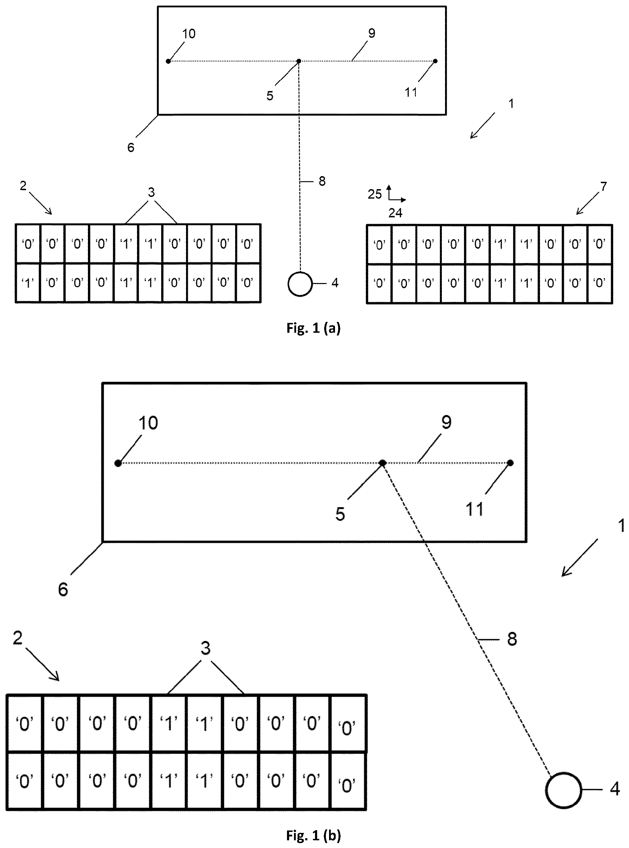

Fig. 1 (a) shows an optical sensing system (1), comprising a first optical sensor (2). The first optical sensor (2) comprises a plurality of sensing units (3), each sensing unit (3) comprising a single photon detector, preferably a SPAD. The SPADs output a binary value, for example corresponding to whether a SPAD detects a photon. The system (1) further comprises a first projector (4) e.g. a light source. The first projector (4) is adapted to project a light beam (8) resulting in a first projection pattern (5) on a first field of view (6). The projection pattern (5) may be a dot pattern having a spot size, for example may be dot-shaped or a semi-dot or disk-shaped or a collection of dots or any other suitable shape.

The system (1) further comprises optics able to produce an image of the field of view (6) on said optical sensor (2). For example, an image of the pattern (5) is produced on sensing units (3) of said optical sensor (2).

For example, Fig. 1 (a) shows four sensing units (3) detecting the first projection pattern (5) on the first field of view (6), and therefore said four sensing units (3) output a '1', while the other sensing units output a '0'. One sensing unit at the very left edge of the optical sensor (2) outputs a '1', which is likely false detection. The skilled person appreciates that the number of sensing units (3) detecting the pattern (5) would depend on the spot size.

The first optical sensor (2) has two sides, a longer and a shorter one. For example, the optical sensor (2) has two axes, one axis (24) along its length, and another one (25) along its width. In other words, said optical sensor (2) is substantially one dimensional i.e. wherein the width is minimal. In this case, it is preferable that the first optical sensor (2) is at least two sensing units (3) wide. This may also depend on the spot size that is expected on the first optical sensor (2), for example if the spot size covers two or three sensing units (3), then the width of the first optical sensor (2) may be two or three sensing units wide. It is preferable that the first optical sensor (2) is at least two sensing units (3) wide because this allows filtering, for example such as filtering based on neighborhood detection.

The system (1) further comprises scanning means, adapted to scan a light beam (8) of the first projector (4) and therefore scan the first pattern (5) on the first field of view (6). Scanning is done in one angular degree of freedom as shown in Fig. 1 (a). Scanning is done correspondingly to the orientation of the first optical sensor (2). For example, the optical sensor (2) is oriented such that it is able to see and detect the first projection pattern (5) being scanned over the first field of view (6). Scanning is done between two extreme points (10, 11) on the first field of view (6), for example wherein each point is at one edge of the first field of view (6). Scanning is done along a trajectory (9), for example along a straight line as shown in Fig. 1 (a), for example back and forth. The trajectory may also be an arc, for example in case the field of view was semi-circular. The thickness of the trajectory (9) corresponds to the thickness of the first projection pattern (5). Since the scanning is done along a single straight line, it allows very low latency imaging, since objects which are moving very fast across the first field of view (6) can be detected. This also depends on the scanning rate, which is defined based on the time it takes for the first pattern (5) to move from one edge of the first field of view (6) to the other, for example from one extreme point (10) to the other (11).

The system (1) further comprises a second optical sensor (7). For example, wherein the depth of the first projection pattern (5) may be obtained by triangulation of the location of the detected light on the two optical sensors (2, 7). Alternatively, the depth may be obtained by triangulating the location of the detected light on the first optical sensor (2) and known location of emitted light of the first projector (4), as shown in Fig. 1 (b).

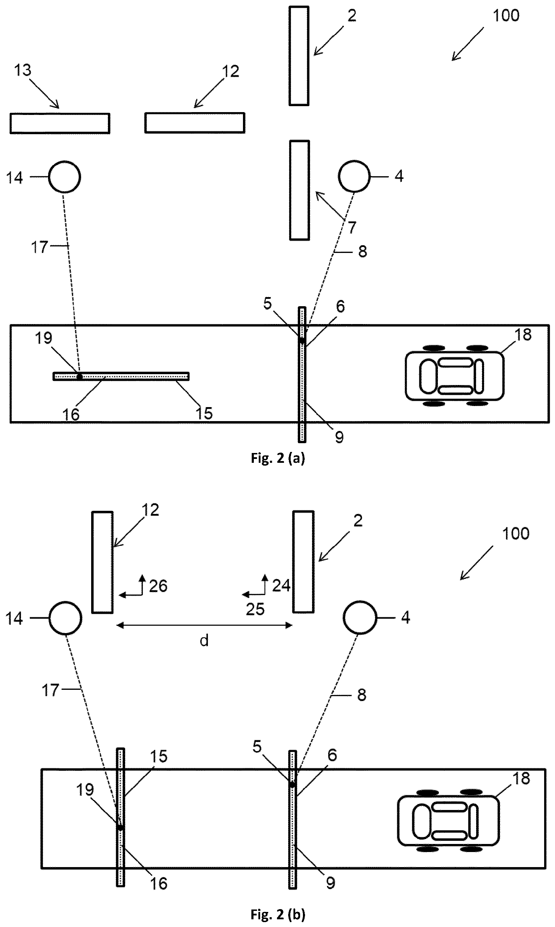

Fig. 2 (a) shows a system (100) comprising four optical sensors (2, 7, 12, 13). For example, a first set of sensors (2, 7) is oriented in a first orientation, for example perpendicular to the direction in which an object (18) is moving, for example a car. A second set of sensors (12, 13) is oriented perpendicularly to the first set of sensors (2, 7), for example in a direction along the movement of the object (18). Each of the first set of optical sensors (2, 7) and the second set of optical sensors (12, 13) have a corresponding light source (4, 14), scanning along a field of view corresponding to the orientation of the optical sensors (2, 7, 12, 13). For example, the first projector (4) is scanning the first field of view (6) using a first light beam resulting in a first projection pattern (5) along a first trajectory (9), while the second projector (14) is scanning the second field of view (15) using a second light beam resulting in a second projection pattern (19) along a second trajectory (16). Since scanning is done in a very fast manner, for example at least 10 Hz, preferably at least 100 Hz, more preferably at least 1 kHz, most preferably at least 10 kHz, the object (18) would be detected even when it is moving very fast (i.e. in comparison to a 2-dimensional scanner i.e. scanning in two dimensions). Scanning rate defined based on scanning the beams and therefore the patterns (5, 19) from one edge of the field of illumination to the other. For example, said first trajectory (19) comprises a plurality of points in which scanning happens.

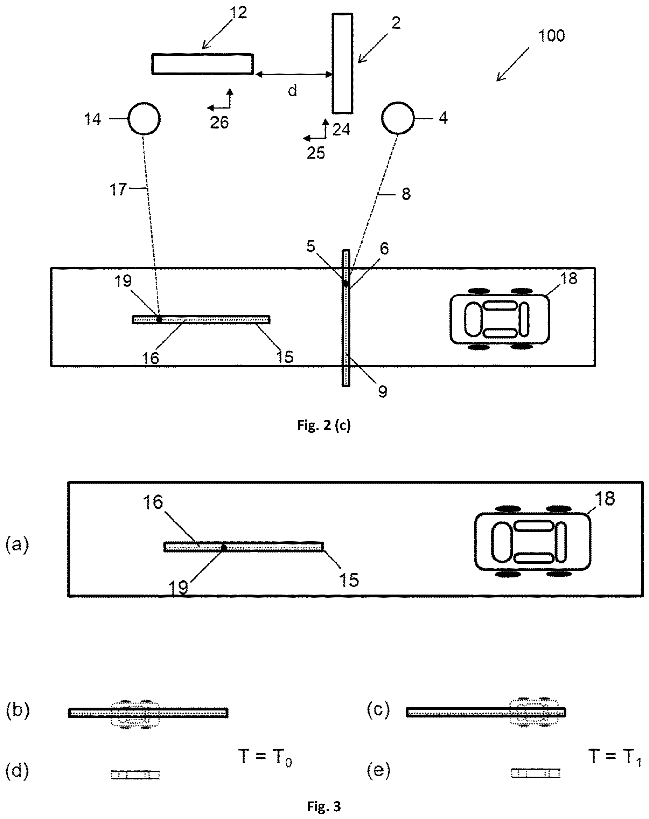

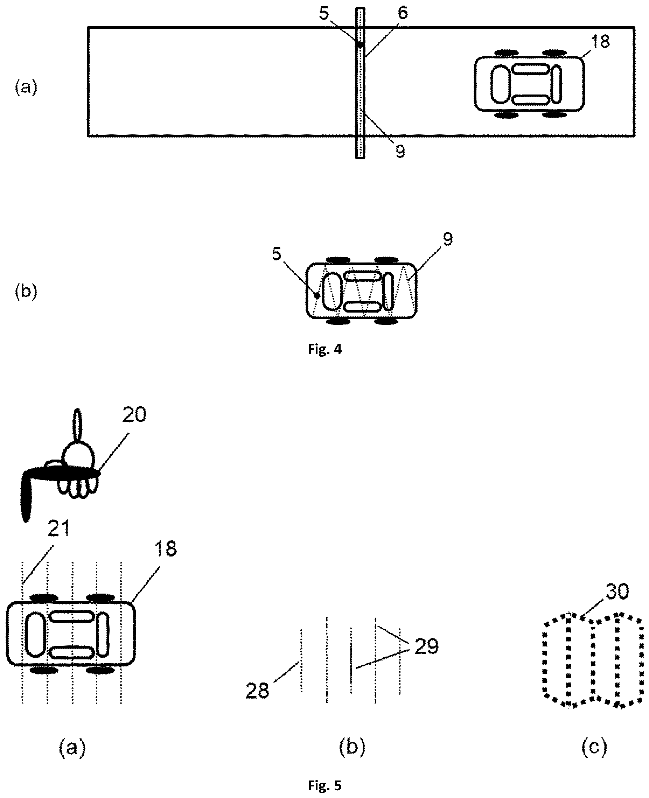

The different optical sensors with different orientations may be used to obtain different results. For example, the first set of optical sensors (2, 7) is advantageous for measuring the cross section of the object (18), for example to calculate or estimate the volume thereof, for example based on the depth of the object (18) with respect to the ground or floor. For example, the cross section of the object (18) may be obtained for a significant part of the car, as shown in Fig. 4 (b), depending on how fast the scanning is. For example, if the scanning is done very fast, a significant part of the object (18) may be reconstructed. On top of that, if the speed of movement of the object is known (as shown below), then a more accurate reconstruction may be obtained, for example with the actual dimensions of the object (18). On the other hand, the second set of optical sensors (12, 13) are advantageous for calculating the speed of movement of the object (18), as shown in Fig. 3.

Another way of calculating the speed of movement of the object (18) is shown in Fig. 2 (b). Fig. 2 (b) shows two fields of view (6, 15), one after another, perpendicular to the direction of movement of the object (18), wherein the fields of view (6, 15) correspond to the projection patterns (5, 19) and the trajectories (9, 16). For example, the optical sensors (2, 12) are placed parallel to each other, and spaced with a predetermined distance (d). Since the predetermined distance (d) between the fields of view is known, the speed of the object can be calculated based on the time it takes for the object to move between the first field of view (6) to the second field of view (15). Many other configurations may be envisaged. For example, the configuration in Fig. 2 (c), which is similar to Fig. 2 (a), but with only two optical sensors (2, 12), since the depth can be found by triangulating projection data of the light source (14) with the optical sensor (12), as explained throughout the document.

Fig. 3 shows the case in which an optical sensor is oriented along the direction of movement of the object (18). For example, at time T = T₀, a cross-section of the object (18) is detected by the sensing units (3) of the optical sensor, as shown in Fig. 3 (b, d), and thereafter at time T = T₁, the cross-section of the object (18) is detected by other sensing units of the optical sensor, as shown in Fig. 3 (c, e). By knowing T₀ and T₁, and the distance between the sensing units detecting said point of the object i.e. corresponding to the distance in which the cross-section has moved, it is possible to calculate or estimate the speed of the object (18).

Fig. 4 shows a field of view (6) of an optical sensor, oriented perpendicular the direction of movement of an object (18). Fig. 4 (a) shows an object moving towards the field of view (6), wherein the field of view (6) is scanned using a projection pattern (5) along a trajectory (9). Since the object is moving at a certain speed, and the projection pattern (5) takes a predetermined time to scan the field of view (6), the object (18) will not be fully scanned. However, a considerable part of the object (18) will be scanned. The scanning rate can be adjusted accordingly such that objects moving very fast can also be detected. Fig. 4 (b) shows how the projection pattern (5) is scanning the object (18) while it moves towards the field of view (5). This scan can be used to estimate the volume of the object (18).

Fig. 5 (a) shows a hand scanning system (20). In this system (20), a user hand scans an object (18), for example along a set of scanning lines (21). For example, the system (20) is configured such that it is able to know the direction and speed of movement of a user's hand, and therefore the distance between the scanning lines (21), for example using a gyroscope. By knowing the distance between the lines (21), it is possible to reconstruct the object (18) along two dimensions. Furthermore, by knowing the depth of the object (18), for example using triangulation as mentioned above, it is possible to obtain a reconstruction along said lines (21). Fig. 5 (b) shows an example, wherein the object has different depths (28, 29). Fig. 5 (c) further shows a grid (30) of the object, wherein said grid (30) is defined based on the movement of the user's hand, and therefore the known distance and locations between the lines (21). In other words, the information from the scanning lines (21) are combined together, to provide a better understanding of the object, while at the same time use 1D scanning instead of 2D scanning. 1D scanners are advantageous over 2D scanners due to their low cost, and because they require less scanning time. They are ideal for applications which do not require a lot of details about objects, wherein a rough knowledge of the object (e.g. depth information, and cross sectional information) is sufficient. For example, by having a few or several scanning lines, it is possible to already get a lot of information about an object, instead of having to scan the scene in 2D, which is more complicated, costly, and time consuming, and often unnecessary.

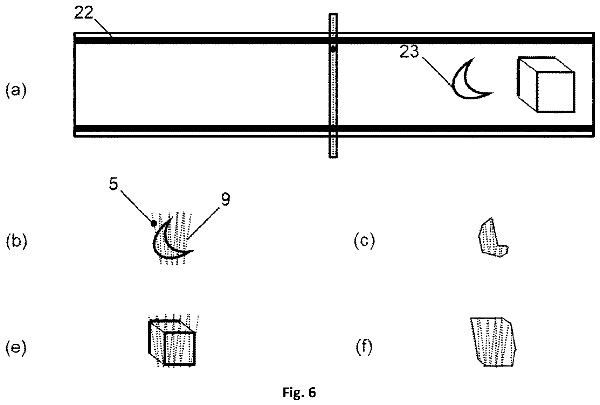

Fig. 6 (a) shows a conveyer belt (22), for example moving with a known speed and having objects (23) thereon. Since the speed of movement of the belt (22) is known, a reconstruction of the object (23) may be obtained, for example with the real or estimate dimensions of the object (18), for example as shown in Fig. 6 (b, c), or as shown in Fig. 6 (e, f). For example, 3D reconstruction may be done, for example wherein the x-dimension is along the direction of the width of the conveyer belt, the y- dimension is along the length of the conveyer belt, and the z-dimension is the depth which is calculated based on triangulation between two optical sensors, or between one optical sensor and one light source. For example, the x-dimension may be obtained using one optical sensor oriented perpendicularly to the motion of the objects on the belt, and the y-dimension may be obtained using one optical sensor oriented parallel to the motion of the objects. The y-dimension may also be estimated using the findings of multiple optical sensors in series, oriented perpendicularly to the motion of the objects on the belt.

Fig. 7 and Fig. 8 show a comparison between a prior art system (Fig. 7) and the system according to the present invention (Fig. 8). The prior art system normally uses a 2-dimensional pixel array to measure the depth of the scene. In this case, the scene is scanned along 2-dimensions, as shown in (a). For example, in a first time instance t = t₀, the pixels labelled in black color detect the pattern (5), as shown in (b). Next, in a second time instance t = t₁, pattern (5) is located on a thick object i.e. an object that is protruding from the surface of the scene, as shown in (c). This results in the detection of the pixels labelled in black color. The depth can be deduced based on the jump of the detection to the lower pixels. In case the object was sunk, then the jump would be expected to be to upper pixels instead. Next, in a third time instance t = t₃, pattern (5) is located back on the normal surface, as shown in (d), in which the pixels jump back to the upper pixels. As shown here, it is needed to use a two-dimensional optical sensor. One of the aims of the current invention is to obtain depth measurement using only a one-dimensional optical sensor. This is shown in Fig. 8, wherein the optical sensor (2) and the light source (4) are both aligned, and wherein the scan is done along a trajectory (9) which is substantially a line, as shown in (a). In this case, instead of the detection jumping along the 2-dimensions of the sensor as in Fig. 7, the detection jumps along the one and only dimension of the sensor, which is the same as the dimension in which the laser light scans. This allows high speed operation, low latency, and low power consumption.

Other arrangements for accomplishing the objectives of the methods and devices embodying the invention will be obvious for those skilled in the art. The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

### LIST OF REFERENCE SIGNS

- **1**: Optical sensing system
- **2**: First optical sensor
- **3**: Sensing unit
- **4**: First Projector
- **5**: First projection pattern
- **6**: First field of view
- **7**: Second optical sensor
- **8**: First light beam
- **9**: First trajectory
- **10, 11**: Extreme points
- **12**: Third optical sensors
- **13**: Fourth optical sensor
- **14**: Second projector
- **15**: Second field of view
- **16**: Second trajectory
- **17**: Second light beam
- **18**: Moving object
- **19**: Second projection pattern
- **20**: Hand scanner
- **21**: Scanning line
- **22**: Conveyer belt
- **23**: Object
- **24, 25**: Axes along the first predetermined length and width
- **26, 27**: Axes along the second predetermined length and width
- **28, 29**: Regions with different depths
- **30**: Grid
- **d**: predetermined distance
- **31**: Object with a thickness

## Claims

1. An optical sensing system (1) for depth estimation, comprising:
- at least a first optical sensor (2), wherein said first optical sensor (2) comprises a plurality of sensing units (3), each of said sensing unit (3) comprising a photo detector, wherein said first optical sensor (2) has a first predetermined length and a first predetermined width, said first optical sensor (2) having a first field of view (6),
- at least a first projector (4) adapted to project a first light beam (8) on said field of view (6),
- a first scanning means, and
- a first set of optics able to make an image of said first field of view (6) on said first optical sensor (2),
**characterized in that**
said first scanning means is adapted to scan said first beam (8) in one angular degree of freedom along or within said first field of view (6).

2. An optical sensing system (1) according to claim 1, wherein said first predetermined length is at least two times longer than said first predetermined width.

3. An optical sensing system (1) according to any of claims 1 or 2, wherein said first beam results in a projection pattern (5), wherein said pattern (5) is imaged on said first optical sensor (2) and has a spot size, wherein the first predetermined width of said first optical sensor (2) is at least equal to said spot size, or wherein said first predetermined width is at least equal to the width of two sensing units (3).

4. An optical sensing system (1) according to any of claims 1 to 3, wherein said scanning is between two extreme points (10, 11) on said first field of view (6).

5. An optical sensing system (1) according to any of claims 1 to 4, wherein the system (1) comprises at least a second optical sensor (7, 12).

6. An optical sensing system (1) according to any of claims 1 to 4 or to claim 5, wherein the system (1) is adapted to triangulate detection points of said first optical sensor (2) with projection position of said first projector (4) or with detection points of said second optical sensor (7).

7. An optical sensing system (1) according to claim 5, wherein said second optical sensor (12) comprises a plurality of sensing units (3), each of said sensing unit (3) comprising a photo detector, said second optical sensor (12) having a second field of view (15),
wherein the system (1) further comprises:
- at least a second projector (14) adapted to project a second light beam (19) on said second field of view (15),
- a second scanning means, and
- a second set of optics able to make an image of said second field of view (15) on said second optical sensor (12),
wherein said second scanning means is adapted to scan said second light beam (19) in one angular degree of freedom along or within said second field of view (15),
wherein said second optical sensor (12) is parallel to said first optical sensor (2) and distanced therefrom by a predetermined distance (d) along the axis (25) defining the first predetermined width, or wherein said second optical sensor (12) is perpendicular to said first optical sensor (2) and distanced therefrom by a predetermined distance (d) along the axis (25) defining the first predetermined width.

8. An optical sensing system (1) according to any of claims 1 to 7, wherein the photo detectors are single photon detectors, preferably SPADs.

9. A method for depth estimation, comprising the steps of:
- projecting a first light beam (8) onto a first field of view, by means of at least a first projector (4), thereby defining a first projection pattern (5) onto said first field of view (6),
- scanning said first light beam (8) on said first field of view (6),
- imaging said first field of view (6) by means of a first set of optics on a first optical sensor (2), wherein said first optical sensor (2) comprises a plurality of sensing units (3), wherein each sensing unit (3) comprises a photo detector, and
- configuring said first optical sensor (2) to have a first predetermined length and a first predetermined width,
**characterized in that** the method comprises the step of:
- configuring said scanning to be in one angular degree of freedom along or within said first field of view (6).

10. A method according to claim 9, wherein the method further comprises the step of configuring said first predetermined length to be at least two times longer than said first predetermined width.

11. A method according to any of claims 9 or 10, wherein the said first projection pattern (5) imaged on said first optical sensor (2) has a spot size, wherein the method further comprises the step of configuring the first predetermined width to be at least equal to the spot size of said first projection pattern (5), or wherein said first predetermined width is at least equal to the width of at least two sensing units (3).

12. A method according to any of claims 9 to 11, wherein the method further comprises the step of providing a second optical sensor (7, 12).

13. A method according to any of claims 9 to 11 or to claim 12, wherein the method further comprises the step of triangulating detection points of said first optical sensor (2) with projection position of said first projector (4) or with detection points of said second optical sensor (7).

14. A method according to claim 12, wherein the method further comprises the steps of:
- projecting a second light beam (17) onto a second field of view (15), by means of at least a second projector (4), thereby defining a second projection pattern (19) onto said second field of view (15),
- scanning said second light beam (17) on said second field of view (15),
- imaging said second field of view (15) by means of a second set of optics on said second optical sensor (12), wherein said second optical sensor (12) comprises a plurality of sensing units (3), wherein each sensing unit (3) comprises a photo detector,
- configuring said scanning to be in one angular degree of freedom along or within said second field of view (15), and
o arranging said second optical sensor (12) parallel to said first optical sensor (2), and distanced therefrom by a predetermined distance (d) along the axis (25) defining the first predetermined width (25), or
o arranging said second optical sensor (12) perpendicular to said first optical sensor (2), and distanced therefrom by a predetermined distance (d) along the axis (25) defining the first predetermined width (25).
